# EUROPEAN PATENT APPLICATION

(11) **EP 2 680 180 A1**
(43) Date of publication of application: **01.01.2014**
(21) Application number: 12305781.2
(22) Date of filing: 29.06.2012
(51) Int. Cl.: G06F 21/00

(54) **System and method for securely allocating a virtualised space**

(71) Applicant: Orange, 75015 Paris (FR)
(72) Inventor: Loui, Sok-Yen, 94370 Sucy en Brie (FR); Ahmad, Zaheer, UB2 5JN London (GB); Dong, Song, TW20 8JA Egham - Surrey (GB); Wary, Jean-Philippe, 92340 Bourg La Reine (FR)
(74) Representative: Cabinet Plasseraud

(57) **Abstract**

A method of securely allocating a virtual space to a third party in a memory of a device is described. The memory has both trusted and un-trusted areas. The method includes the steps of receiving a request for a virtual space allocation from a third party and authenticating the third party. The method also includes the steps of determining the existence of a unique virtual space controller for controlling access to a virtual space in an area of the memory, the unique virtual space controller being uniquely associated with the virtual space and requesting the creation of a unique virtual space controller if one does not exist. The unique virtual space controller is located in a trusted area of memory and arranged to enforce a security policy for communication with the virtual space. Finally, the method comprises the step of providing the third party with the security policy for communication with the virtual space.

## Description

The present invention relates to the field of embedded system virtualization. More specifically, the present invention relates to a system and method of securely allocating a virtual space to a third party in a memory of a device.

In the legacy fixed computing world, a user is allowed to install various third party applications running on an open operating system. Security issues, such as viruses, spyware exploiting applications and/or "OS" (for "Operating System") vulnerabilities have appeared, because user devices are usually equipped with IP connectivity and can be connected to the Internet. Because of this, on one side, the user is faced with malwares and on the other side, third party service providers that have to deliver a service onto the user's device over the internet are concerned with the assurance to operate a safe service for their customers. The same problems occurred in the domain of Machine-to-Machine ("M2M") and Internet Of Things (IOT), with more constraints, as in this latter case an equipment could operate without any human interaction for a long period of time.

Similarly, in the mobile computing world, hand-held devices are no longer simple device for making telephone calls, but are rather powerful communication and entertainment computing platforms for multimedia players, web surfing, social networking, GPS navigation and electronic financial transactions. This usage is boosted by various application stores that allow third party applications to be downloaded and installed easily onto the device. Unfortunately, this rich range of applications also leads to the potential installation of malicious applications that brings security concerns such as unauthorized access to personal data, geo-location information about the user, fraudulent usage of premium services, etc.

For both fixed and mobile computing worlds, solutions addressing these security issues exist. A first known solution is proposed on an application level: anti-virus for fixed and mobile devices; firewalls to enforce access and flow policy; sandboxing mechanism in web browsers to run Java applets; specific permission model to enforce access control to critical resources. A second known solution is based on dedicated hardware, such as Security Digital card, Trusted Platform Module (or "TPM") for cryptographic operations and key storage. And a third solution uses hypervisors to isolate third party applications in virtual machines running on the same physical hardware.

Typically, access control and virtualisation of hardware is performed by what is known as a "hypervisor" (also known as a Monitor or a Virtual Machine Manager, or a "VMM"). By using such an entity, several virtual spaces can be created under the control of a hypervisor inside a device. In accordance with these types of schemes, a user who owns a plurality of devices such as set-top-box, mobile handset, laptop, or "smart appliance" like networked refrigerator, is able to apply such schemes on each of his/her devices

Known hypervisors in such devices create virtual spaces mainly for isolation purposes. Applications running in one virtual space cannot directly access the data in memory areas dedicated to other virtual spaces. Any communication between an application in one virtual space and an application in another virtual space is facilitated by the hypervisor. This functionality is obtained by trapping instructions and using specific protocols to communicate between the virtual spaces. Although hypervisors can provide some level of software-based isolation to processes and data, the information in a virtual space and/or the information in other areas of the device hosting the virtual space can still be compromised by rogue programs since this solution is completely software-oriented. Thus, the difficulty is to give the assurance of a safe delivery of services to third parties and to the user who owns the device.

In order to try to remedy this deficiency, other types of isolation have been developed, which types include hardware assisted techniques in which a portion of memory is defined as being "trusted". Once memory locations are defined as trusted, only trusted applications can get access to them in order to create a TEE (Trusted Execution Environment). An example of such a system is TrustZone™, in which an extra address bit is used to distinguish between two "worlds", named "normal world" and "secure world".

As opposed to the software isolation of virtual spaces created by a hypervisor, trusted memory is hardware protected and is controlled by dedicated monitoring software known as a "monitor". The processes and data that need high levels of security are processed and stored in the TrustZone™ secure world. After the completion of the TEE process, the monitor switches back to the normal world.

Whilst the security created by the establishment of a TEE is considered higher than the security provided by the hypervisor, the size of the trusted memory space is often limited in embedded devices and only part of a process that needs critical levels of security can therefore be processed in the trusted memory. Moreover, the price of such a solution limits its use in embedded devices. Thus, today, existing software based solutions are prone to attacks and TPM or TEE based solutions have limited space to host third party applications.

Accordingly, there is currently no technical solution to the problem of enabling remotely the capability of creation, allocation and management of virtual spaces for third party usages in embedded devices with critical levels of security and isolation by simultaneously giving trust to the user of the device and to the third party regarding the safety execution environment of its delivery service.

In order to solve the problems associated with the prior art, the present invention provides a method of securely allocating a virtual space to a third party in a memory of a device, the memory having both trusted and un-trusted areas, the method comprises the steps of: receiving a request for a virtual space allocation from a third party; authenticating the third party; determining the existence of a unique virtual space controller for controlling access to a virtual space in an area of the memory, the unique virtual space controller being uniquely associated with the virtual space; requesting the creation of a unique virtual space controller if one does not exist, wherein the unique virtual space controller is located in a trusted area of memory and arranged to enforce a security policy for communication with the virtual space; and providing the third party with the security policy for communication with the virtual space.

The method may further comprise the step of: if the request comprises a constraint on the virtual space, verifying whether the device satisfies the constraint.

Preferably, the constraint on the virtual space is one of needed memory size for the virtual space, the type of the device, the address of the device in the network, the usage profile, and the duration of the use.

The method may further comprise the step of: if the request comprises a constraint on the device, verifying whether the device satisfies the constraint.

Preferably, the constraint on the device is one of available size in memory, device capability, description of the foreseen usage of the virtual space, and device address.

Preferably, the method further comprises the step of: verifying the legitimacy of the request sent by the third party.

Preferably, the step of verifying the legitimacy of the requests includes the step of verifying whether the third party is authorized to access a virtual space in a specific device.

Preferably, the method further comprises the steps of: requesting, from the third party, an indication of the security policy to be enforced; and receiving, from the third party, an indication of the security policy to be enforced.

Preferably, the step of requesting from the third party an indication of the security policy to be enforced, further includes requesting that the third party select a security policy from a number of predefined security policies.

Preferably, the unique virtual space controller is located in the trusted area of a first device, and the virtual space is located in a second device, which second device is remote from the first device.

Preferably, the method further comprises the steps of: informing the third party of the virtual space allocation; and enabling the third party to communicate directly with the virtual space under the control of the unique virtual space controller.

Preferably, upon receipt of the allocation request form the third party, the method further comprises the steps of: retrieving user identity from a universal subscriber identity module comprised in the device; and memorizing the user identity as a trusted record.

The present invention also provides a computer program product for a data-processing device, the computer program product comprising a set of instructions which, when loaded into the data-processing device, causes the device to perform the steps of the above method.

The present invention further provides a master controller for securely allocating a virtual space to a third party in a memory of a device, the memory having both trusted and un-trusted areas, the master controller comprises processing means arranged to: receiving a request for a virtual space allocation from a third party; authenticating the third party; determining the existence of a unique virtual space controller for controlling access to a virtual space in an area of the memory, the unique virtual space controller being uniquely associated with the virtual space; requesting the creation of a unique virtual space controller if one does not exist, wherein the unique virtual space controller is located in a trusted area of memory and arranged to enforce a security policy for communication with the virtual space; and providing the third party with the security policy for communication with the virtual space.

As will be appreciated by the skilled reader, the present invention provides several advantages over the prior art. For example, the present invention provides for the dynamic creation and management of virtual spaces over remote equipments. Moreover, the present invention provides increased flexibility and granularity of the management of virtual spaces, in that it allows users to determine how applications are run (or which applications are allowed) and in particular the present invention allows the application of a specific third party's security policy to each virtual space or even hosted applications in those virtual spaces. Moreover, the method allows the third party to modify the security policy during the usage of the allocated virtual space.

In accordance with the present invention, all input-output requests to the virtualized area are potentially subject to the control and authorization of a management entity which is outside of the hypervisor. This outsourcing permits the strict allocation of the virtual space security to the control of a specific third party, while simultaneously managing several virtual spaces allocated to many third parties.

Furthermore, in current systems, virtualization of a device is merely controlled locally without end-to-end proof of security. In particular, using prior art devices, it is not possible to dedicate a virtual space of a device to a specific third party autonomously and with a level of the security tailored to that third party. Dissimilarly, the dual virtual space controller of the virtual space enforces the security policies which are necessary to protect the integrity of the virtual space and its contents, in particular the dedicated dual virtual space controller of the virtual space controls the security of communication of this specific virtual space with the others memory areas of the device. The proposed framework facilitates third party applications to be installed securely in a dedicated virtual space controlled by the master application for instance in a trusted Environment or in TEE with correct level of security.

Moreover, in some examples, if a user has several devices capable of creating trusted and un-trusted memory spaces, it is possible to connect virtual spaces of these devices securely with one another to create a Virtual Private Network (VPN). An advantage of the present invention is that several virtual spaces are connected through this VPN , in which the routing function of this VPN is assumed by the master controller service and the controls of exchanged flow inside this VPN are enforced by the local virtual space hypervisor under the strict control of associated dual virtual space controller services. Each virtual space can be allocated to a third party by the user so that a third party program can run in the dedicated virtual space and potentially been in communication with other virtual space owned by other third party.

Another advantage of the present invention is that it allows the third party to directly manage a dedicated security policy for every virtual space it has enslaved/controlled, i.e. on every device. This provides flexibility to implement in every location or device, or for every couple (VS, DVSC) its own specific and chosen security policy which is more detailed and precise than the fleet security management provided by known systems.

Furthermore, the system of the present invention can help to implement new "M2M" (for "Machine to Machine") services in trusted environment under control of the owner of the M2M devices. The proposed invention facilitates third party identification of a virtual space and its owner quickly, as the notion of trusted virtual space and related "e2e" (for "end-to-end") service link is readily available. So the third party can securely run its services in the desired location of the user network.

Other advantages and benefits of the present invention will become apparent from a consideration of the following description and accompanying drawings, in which:
FIGURE 1 is high-level diagram of a network which can be used in accordance with an embodiment of the present invention;
FIGURE 2 is high-level diagram of a scheme to allow third parties to access virtual spaces in a user's network in accordance with an embodiment of the present invention;
FIGURE 3 is flow chart representing a method of allocating a virtual space to a third party;
FIGURE 4 is a schematic illustration of the use of a Universal Subscriber Identity Module by a master controller to provide the identity of the user to a third party; and
FIGURE 5 is a high-level functional diagram of the operation of a dual virtual space controller.

In the present disclosure, the term virtual space (VS) is defined as an isolated area in an area of a memory of a device. A virtual space can be created by known virtualization techniques such as a hypervisor. In this description, we associate the notion of virtual space with the underlying system in charge of the virtualization technique. For instance, the virtual space corresponds to the set comprising the hypervisor which managed the virtualized space, and the virtualized space itself, it means that the global notion of virtual space comprises the operating system which allows communication outside of the virtual space itself.

The term dual virtual space controller (DVSC) is defined herein as a trustable application stored in some area of the device memory. In the present disclosure, the terms dual virtual space controller and virtual space controller signify the same application, the usage of the word dual is used to reinforce the unique link between a virtual space and its corresponding dual (as unique) virtual space controller. The dual virtual space controller is provided to control the virtual space in an area of the memory of the device. In this description, the notion of dual space controller is associated with the means necessary to allow the dual virtual space controller to communicate outside of the dual virtual space controller component itself.

A trusted area is an area in the memory considered as trusted by the user who owns the device or by an operator of the global service; moreover a third party may recognize the trusted status of this area. Nowadays, several equipments are considered to offer trusted areas, e.g. smartcard, "HSM" (for "Hardware Secure Module"), "TPM" (for "Trusted Platform Module"), "SOC" (for "Security Operating Center"), which forms a set of systems dedicated to security management, System on Chip and the dedicated computer of the user who considers it as trusted.

A user's devices network is a network comprising several devices owned or operated by the user, which network is managed by the user itself.

The term master controller (MC) is defined herein as a trustable application which acts as a security gateway to facilitate the allocation of dual virtual space controllers and virtual spaces to third parties outside of the user's device network. This master controller is considered as trusted by the user or by the operator of the global service, and a third party may recognize the trusted status of this application.

An embedded hypervisor is defined herein as a software layer specifically designed to virtualize part of an embedded device. Such embedded devices can include, but are not limited to, laptops, communication modules, mobile handsets or set-top boxes and connected equipments.

A "Trusted Execution Environment" ("TEE") is defined herein as a hardware-assisted security framework standardized within Global Platform. It is a separate execution environment that runs alongside a Rich Operating System and provides security services to that Rich Operating System Environment. The Rich Operating System is defined herein as an operating system environment with a rich capability set. This environment allows a user to download and run applications. The Trusted Operating System is defined herein as an operating system running in the TEE. It provides the TEE Internal API (for "Application Programming Interface") to trusted applications and a proprietary method to enable the TEE client API software interface from other execution environment.

Third party (TP) is a general term used by those skilled in the art of information technology for identifying a person or an entity which does not own the user's or operator's network, system or device, but which can access a primary user's or operator's network, system or device with permission from that primary user or operator and/or from the network, system or device themselves to deliver services or contents. The third party is generally, but is not limited to, represented by the client application installed from an application store in an equipment of the user or operator. More generally, a third party is running its own infrastructure of networks and servers in order to be able to deliver, bill, charge the requested content or service to a consumer over operator's networks and services.

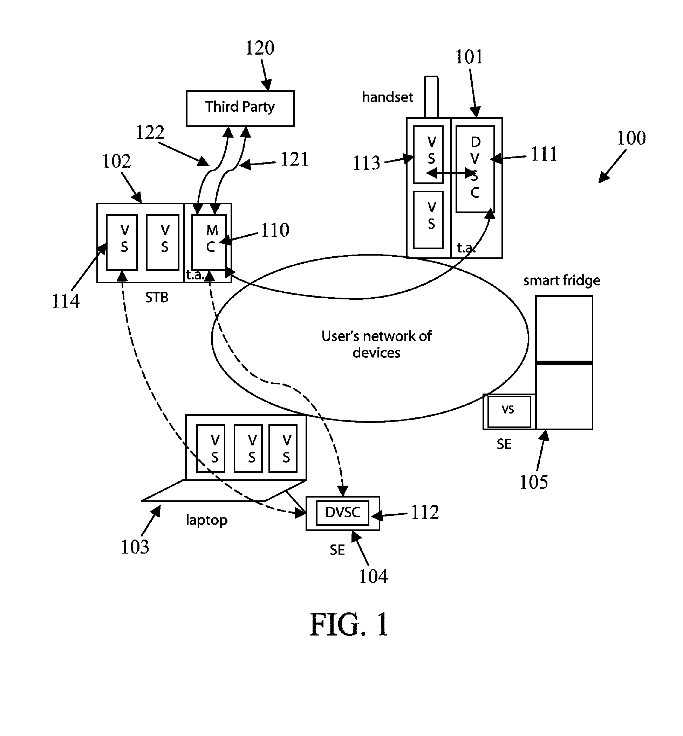

Figure 1 shows a high-level diagram of a private network 100 which can be used in accordance with an embodiment of the present invention. As can be seen in Figure 1, a third party 120 is outside of the private network 100. The private network 100 consist of user's devices that may or may not have trusted memory, such as a laptop 103 with an hypervisor (the hypervisor is not represented on figure 1), a secure element 104 connected to a USB port of the laptop, a smart appliance with embedded secure element such as a smart fridge 105, a set-top box 102 with a trusted area ("t.a." on figure 1) and a handset 101 with a trusted area. The invention is not limited to such a private network.

Using the framework of the invention described herein, a master controller 110 can be implemented in a trusted device area, such as the trusted area of the set-top box 102. The master controller 110 handles the requests from third party 120 requesting for allocation of virtual spaces in any of the device in the private user's network 100. The master controller 110 receives the requests 121 and 122 for virtual space allocation from the third party 120. Then, the master controller 110 determines for each request which dual virtual space controller can handle the virtual space allocation in the case where the virtual space already exists. In the other case, the master controller 110 determines which dual virtual space controller can handle the virtual space creation and allocation.

Virtual spaces can be created in a memory area on any device of the private network 100, and some devices, such as handset 101, set-top-box 102 and laptop 103 can host several different virtual spaces. Virtual spaces and the associated dual virtual space controllers can be located in the same device or in different devices. In some implementation, the master controller and the dual virtual space controller are co-localized together in the same device. In this case, a unique application implementing the master controller function and the dual virtual space controller function can execute both functions. In Figure 1, the virtual space 113 is under the control of the dual virtual space controller 111 and both are located in the same handset 101. The virtual space 114 located in the set-top box 102 is under the control of the dual virtual space controller 112 located in the secure element 104 connected to the laptop 103.

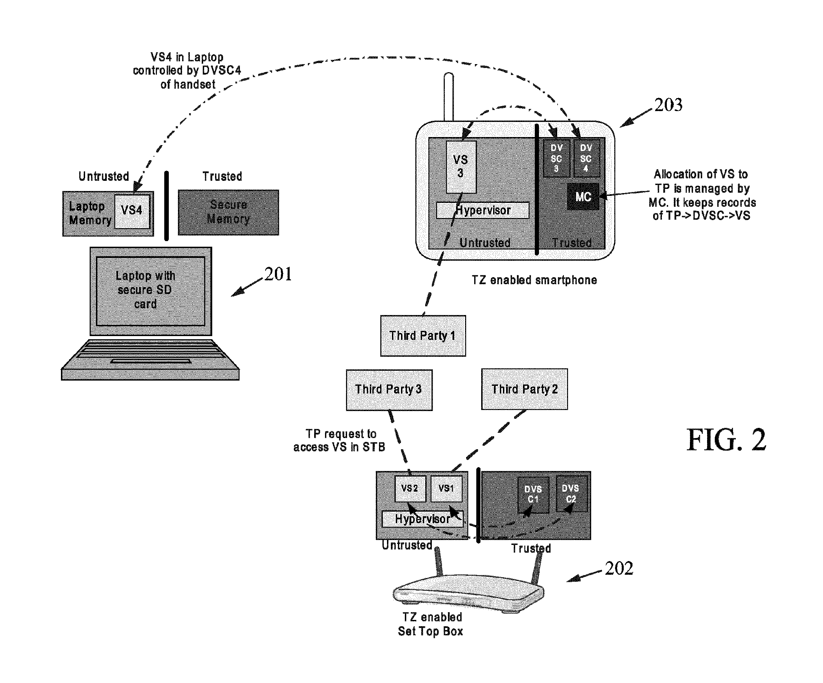

With reference to Figures 2 to 5, the operation of the master controller (MC) will now be described. Figure 2 is a high-level diagram of a scheme that displays an example illustrating several virtual space/dual virtual space controller/third party associations at a given point in time: the master controller MC has previously received allocation requests for association of virtual space VS2 with dual virtual space controller DVSC2 for third party TP3, virtual space VS1 with dual virtual space controller DVSC1 for third party TP2, virtual space VS3 with dual virtual space controller DVSC3 for third party TP1, and we notice that the existing association between virtual space VS4 and dual virtual space controller DVSC4 is no more related to a dedicated third party. It means that the virtual space VS4 could be available for a new incoming allocation request from a third party.

In one embodiment of the invention, a function of the master controller is to route information between the dual virtual space controller of one device and the virtual space of other device in a "VPN" (for "Virtual Private Network") of user-connected devices. In another embodiment of the invention, the dual virtual space controller reroutes information from the virtual space to the master controller. Other functions of the master controller are:
- to route information between a dual virtual space controller and its associated virtual space;
- to allocate a specific dual virtual space controller to a specific third party;
- to check the identity of a third party, and optionally validate de legitimacy of the request received from the third party;
- to keep updated records of associations between at least the third party, associated dual virtual space controller and corresponding virtual space;
- in some embodiments, to provide an indication of the identity of the user and/or the devices and/or the involved third parties to the user or the third parties.

The master controller MC is installed in a trusted area of a device, as shown in Figure 2. The master controller MC can be downloaded either at the same time as the dual virtual space controller DVSC1 to DVSC4 application, or separately. There can be one master controller MC or multiple master controllers in one network of connected devices. Modules in the master controller MC include at least routing tables, and optionally others information such as security policies of secure elements, database of the existing virtual spaces, operation status of the connected devices in the network. The main function of the master controller MC is to provide the secure routing information to the third party, so that right virtual space can be reached by the third party. After the master controller MC allocates a dual virtual space controller to a third party, the third party can communicate directly with the virtual space under the control of the dual virtual space controller. In particular, the access to the virtual space is controlled by the enforcement of a security policy decided by the third party. The dual virtual space controller is then responsible for the monitoring of activities inside the virtual space and reporting those activities to the related secured operating system.

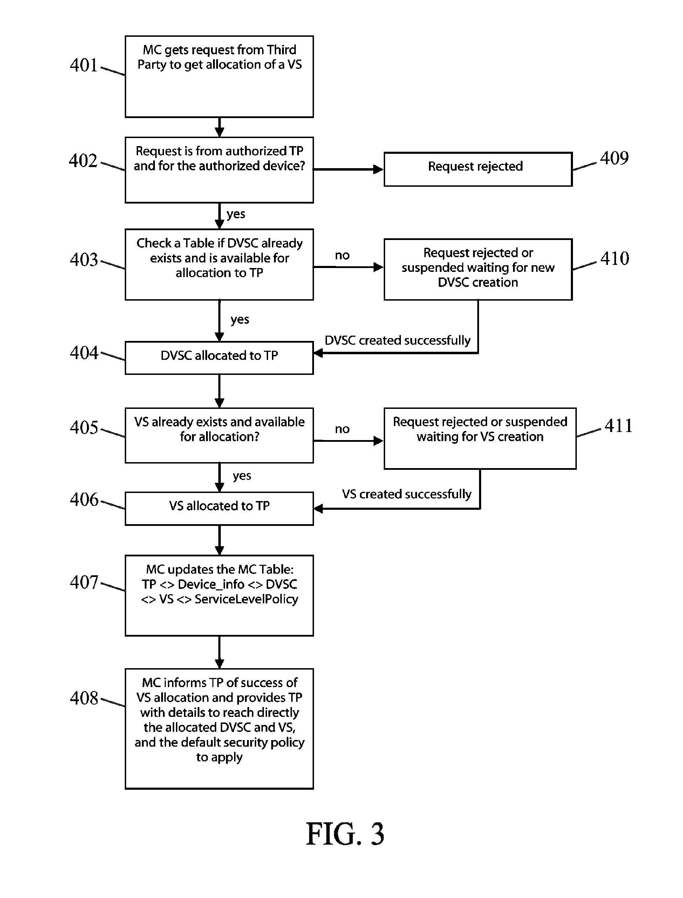

Figure 3 shows exemplary illustration of the steps that may be executed by the master controller MC when an allocation request is received from a third party TP. In an embodiment, at step 401, a third party sends an allocation request to a user to allocate to it a virtual space in one of the devices in the user's network. This request is sent to a user's device which hosts the master controller. The request can specify constraints related to the device which will host the requested virtual space or constraints related to the virtual space to be allocated. For example, a constraint on device can consist of characteristics of the device: available size in memory, device capability such as a device with a screen, device type such as a TV, or mobile phone, or connected equipment, or laptop, or domestic device etc., description of the foreseen usage of the virtual space, device address, etc. For example, constraints on a virtual space can consist of the following characteristics: needed memory size for the virtual space, type of the device, address of the device in the network, usage profile, duration of the usage, etc. At step 402, the master controller checks the authentication of the request, i.e. it authenticates the third party. For instance, the third party provides an identity proof by supplying a certificate. Optionally, the master controller validates the legitimacy of the request sent by the third party. For instance, the master controller checks if the authenticated third party is allowed to request a creation of a virtual space on a specific device, or a device of a specific type. It also analyses constraints provided in the request, if any. If a device address is specified, the master controller extracts the address of the target device from the request. If the request is not from an authorized third party or if the target device is not the authorized device for the requested third party, the request is rejected in step 409 and a rejection message could be sent back to the third party.

In an embodiment, the master controller can also challenge the identity of the third party. In this case, the master controller can check a database it owns in order to find if a trusted identity record associated to the third party is available.

After the master controller grants authorization of the third party allocation request, the master controller checks at step 403 a table it owns, called MC table. MC table memorizes associations between a third party, device information, a dual virtual space controller, a virtual space, and a security policy. Such an association is noted (TP <> device_info <> DVSC <> VS <> SecurityLevelPolicy). The master controller also determines whether any dual virtual space controller are available for allocation. If a dual virtual space controller is already available to be allocated to the third party, the master controller allocates the dual virtual space controller to the third party at step 404. In step 405, the master controller checks its MC table of dual virtual space controller records whether a virtual space is available and already associated to the dual virtual space controller. If a virtual space is available, it is allocated to the third party in step 406. Then the master controller updates its table in step 407. Finally, in step 408, the master controller informs the third party of success of a virtual space allocation and provides the third party with details to reach directly the allocated virtual space and dual virtual space controller.

The master controller allows also to keep information that a security policy is associated to a virtual space. This information is stored in the MC table in a "SecurityLevelPolicy" field. A default SecurityLevelPolicy can be set by the master controller at the end of the virtual space allocation procedure. This SecurityLevelPolicy is translated into security rules and stored in the dual virtual space controller. During the allocated virtual space usage, the third party can modify the security level policy either by sending a request to the Master Controller which can relay the request to the corresponding dual virtual space controller or by updating the security rules in the corresponding dual virtual space controller provided that the master controller allows the third party to access directly the dual virtual space controller. In the latter case, the dual virtual space controller updates the master controller with the modified security level policy.

If no dual virtual space controller is available during step 403, in step 410 whether the master controller rejects the request and sends back a rejection message to the third party, or the master controller requests to an external Trusted Service Manager (not shown) to create a dual virtual space controller in a dedicated trusted area.

If no virtual space exists and is available for allocation during step 405, in step 411, whether the master controller rejects the request and sends back a rejection message to the third party, or the master controller requests the allocated dual virtual space controller to create a virtual space in a device taking into account all the constraints, if any provided in the initial request from the third party.

In one embodiment the master controller can be installed by default in the TEE component of a device in order to manage and securely route sensitive requests between installed secure elements or components in the device. For example, the master controller can manage the internal network comprising the TEE, an "USIM" (for "Universal Subscriber Identity Module") card and/or other devices, such as a microSD Card (for "micro Secure Digital Card").

The master controller can therefore allocate a virtual space to the third party and, through each respective dual virtual space controller, manage several virtual spaces allocated to many third parties. The table below is an example of a master controller relating to a situation of N virtualized zones enslaved to P external third parties.

N is the number of virtual spaces (for instance, seven) named VS1 to VS7, P is the number of third parties (for instance, five) named P1 to P5. In order to control N virtual spaces, N dual virtual space controllers (named DVSC1 to DVSC7) are required because of the uniqueness of the association between a virtual space and a dual virtual space controller, each of which will be stored in a trusted location. Thus, one example of a master controller mapping table is:

| **VS identity** | **DVSC identifier** | **Third Party owner** |
|---|---|---|
| VS1 | DVSC3 | P1 |
| VS2 | DVSC2 | P1 |
| VS3 | DVSC7 | P3 |
| VS4 | DVSC5 | P3 |
| VS5 | DVSC1 | P2 |
| VS6 | DVSC4 | P4 |
| VS7 | DVSC6 | P1 |

In the above example, seven virtual spaces are dispatched over four different third parties. The seven virtual spaces are controlled by seven dual virtual space controllers, which can operate from any number up to seven different trusted areas. An important feature of this above table is that every virtual space is controlled by a single associated dual virtual space controller. The third party P5 is not connected to any of the seven virtual spaces VS1 to VS7.

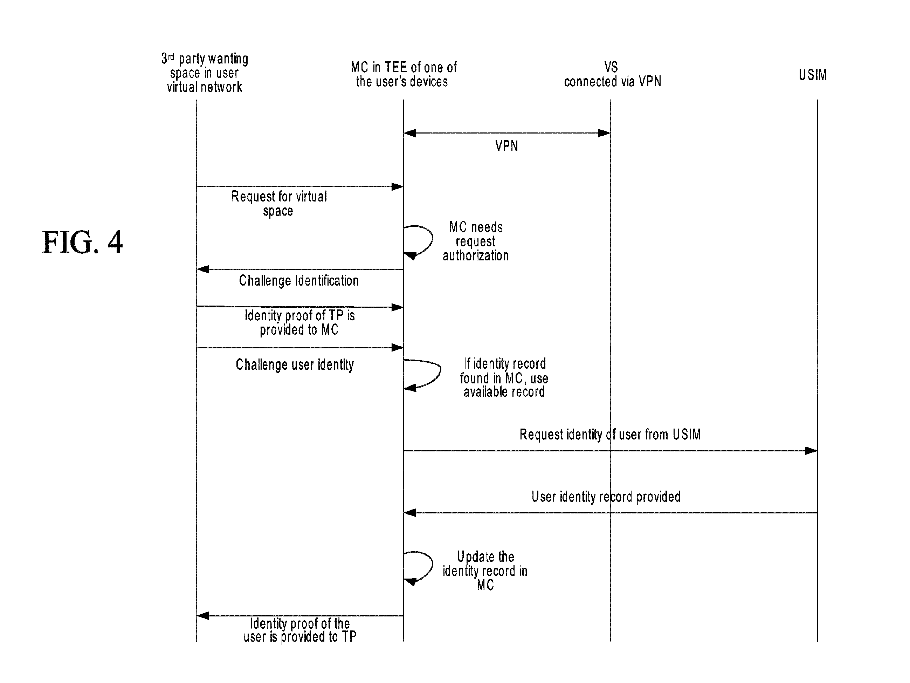

Figure 4 shows a schematic illustration of how the master controller can use a USIM to provide the identity of a user to a third party. Identity information related to the owner of the device in which the third party is interested in getting a virtual space allocation can be stored in the master controller. The master controller knows that a specific USIM exists for this specific virtual space due to the content of its table MC Table which describes the device type of the device hosting the virtual space. In the same way, the master controller is able to provide information on the set of user's identities available for a third party. For instance, the master controller may know all the USIM information used in the user's network of devices of some family house: parents and children mobile phones. Again, the master controller is a trusted application that is stored in TEE, and only authorized entities can modify its identity details, such as network operator's identity.

In the process of Figure 4, a request is first sent from a third party wanting allocation of a virtual space in a user virtual network to the master controller of a user's device. Then, the master controller checks whether the third party is authorized by way of challenge authentication. Once authentication is completed, the master controller requests the identity of the user from the USIM. The USIM provides its identity record. It can also answer to an authentication challenge. Then, the master controller updates an internal record, if needed, and the identity proof of the user is provided to the third party. In one embodiment of the invention, the dual virtual space controller associated to each virtual space may control the legitimacy of those third party's request.

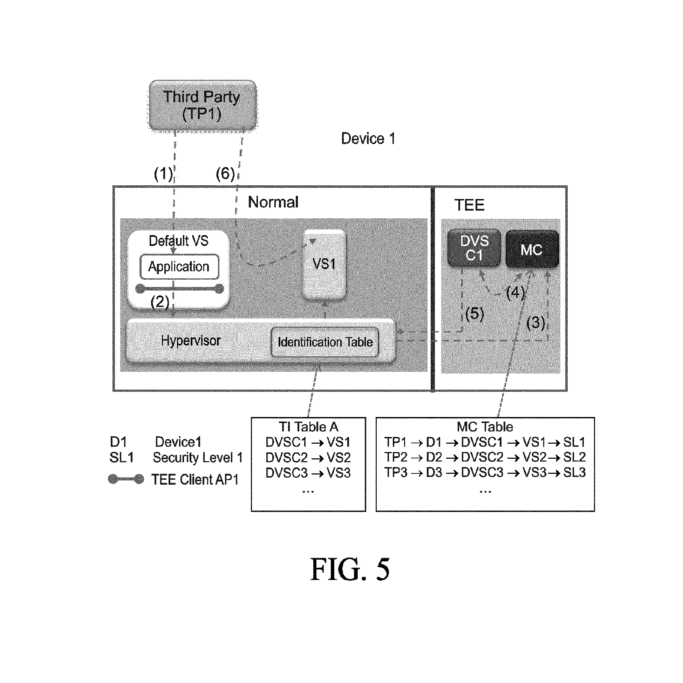

Figure 5 shows the flow of information in some implementation based on the device Device 1, which is for instance a mobile phone, between normal OS and TEE for allocation of virtual space to third party. In step 1, via an application, the third party TP1 requests the creation of a virtual space prior to deliver the service. In step 2, the application uses the Rich Execution Environment API to communicate with the hypervisor and the creation request is sent to the hypervisor.

The hypervisor relays the creation request to the master controller MC which performs security controls, e.g, it authenticates the third party and requests authorization from the device owner, as shown in step 3. If authorization is granted, then the master controller MC allocates dual virtual space controller DVSC1 to third party TP1 and sends back an acknowledgement to the hypervisor as depicted in step 5. The dual virtual space controller DVSC1 then sends a request to the hypervisor to create the virtual space VS1 for the third party TP1. In step 6, upon successful creation of the virtual space VS1, the third party TP1 can access the allocated virtual space VS1 to deliver the service.

In some embodiment of the invention, the set of multiple dual virtual space controllers hosted in the network of user's devices could be implemented in such a way that a unique binary code of dual virtual space controller is implemented over a set of several dual virtual space controllers' data. In this scheme, every allocated or created virtual space is associated to a unique instance of a dual virtual space controller data over a common dual virtual space controller binary.

The proposed dual virtual space controller is an application that can be stored either in a secure element or in an isolated component of the trusted area of a device. The major role of dual virtual space controller application is to provide security for in and out access control service to the allocated dedicated virtual space. A secondary role of the dual virtual space controller can be to request the creation or the erasing/destruction of a given virtual space, as well as control, administration and management of the dedicated virtual space.

The dual virtual space controller monitors and manages the activities taking place in the dedicated virtual space. Such activities are related to security, control of contents and resources by the virtual space. The dual virtual space controller can delete the virtual space at any time and create other virtual space in any other location.

The dual virtual space controller uses pre-defined methods to check the integrity of a virtual space. In one example, a third party requests the use of a virtual space in a user device consisting of a rich operating system and a hypervisor. The OS of the device which receives the request sends the request to the relevant hypervisor through the master controller if the virtual space is to be created in a remote device.

In one example, when an application or data in a dedicated virtual space seeks access to other memory locations outside the allocated space for the dedicated virtual space, the request must pass through the security policies controlled and defined by the dual virtual space controller inside the hypervisor. An example of such a scenario can be access to a website by the application inside the protected virtual space. In this case, the dual virtual space controller verifies the rights and security policy to determine if the application is allowed to access the website. This security policy is created at the time of the allocation of the virtual space to third party and this policy is stored securely in the dual virtual space controller, in trusted area. Any modification in the security policies are under control of the dual virtual space controller.

If a process in a slave virtual space needs to send a sensitive data flow, like transferring the rights of a video to a location outside the virtual space, the hypervisor forwards the request to the dual virtual space controller, where the authorization for the particular process is granted or denied. If granted, the dual virtual space controller informs the hypervisor about the authorization, and then the sensitive data flow can be sent outside the virtual space. In some embodiment, the control related to a specific file can be done through cooperation between the hypervisor of the virtual space and the operating system installed and running in this virtual space.

The hypervisor makes sure the contents in the slave virtual space are only visible to authorized entities. In one example, a third party application can run in a dedicated virtual space under the control of the dual virtual space controller. If an application outside the protected virtual space, i.e. virtual space enslaved by dual virtual space controller, sends a request to gain access to the information inside the virtual space, the hypervisor traps the request, where the security policies are enforced by the controlling dual virtual space controller.

In an exemplary embodiment in accordance with the present invention, all the information, content and applications installed in a virtual space by a third party, under the control of dual virtual space controller associated, are stored encrypted in the memory of the equipment. The required content is decrypted on the fly based on need, either in full when the virtual space is mounted or initialized. This encryption can be realized under the direct control of the hypervisor or dual virtual space controller.

## Claims

1. A method of securely allocating a virtual space to a third party in a memory of a device, the memory having both trusted and un-trusted areas, the method comprising the steps of:
receiving a request for a virtual space allocation from a third party;
authenticating the third party;
determining the existence of a unique virtual space controller for controlling access to a virtual space in an area of the memory, the unique virtual space controller being uniquely associated with the virtual space;
requesting the creation of a unique virtual space controller if one does not exist,
wherein the unique virtual space controller is located in a trusted area of memory and arranged to enforce a security policy for communication with the virtual space; and
providing the third party with the security policy for communication with the virtual space.

2. A method according to claim 1, further comprising the step of:
if the request comprises a constraint on the virtual space, verifying whether the device satisfies the constraint.

3. A method according to claim 2, wherein the constraint on the virtual space is one of needed memory size for the virtual space, the type of the device, the address of the device in the network, the usage profile, and the duration of the use.

4. A method according to claim 1, further comprising the step of:
if the request comprises a constraint on the device, verifying whether the device satisfies the constraint.

5. A method according to claim 4, wherein the constraint on the device is one of available size in memory, device capability, description of the foreseen usage of the virtual space, and device address.

6. A method according to any of the previous claims, the method further comprising the step of:
verifying the legitimacy of the request sent by the third party.

7. A method according to claim 6, wherein the step of verifying the legitimacy of the requests includes the step of verifying whether the third party is authorized to access a virtual space in a specific device.

8. A method according to any of the preceding claims, the method further comprising the steps of:
requesting, from the third party, an indication of the security policy to be enforced; and
receiving, from the third party, an indication of the security policy to be enforced.

9. A method according to claim 8, wherein the step of requesting from the third party an indication of the security policy to be enforced, further includes requesting that the third party select a security policy from a number of predefined security policies.

10. A method according to any of the preceding claims, wherein the unique virtual space controller is located in the trusted area of a first device, and the virtual space is located in a second device, which second device is remote from the first device.

11. A method according to any of the preceding claims, wherein the method further comprises the steps of:
informing the third party of the virtual space allocation; and
enabling the third party to communicate directly with the virtual space under the control of the unique virtual space controller.

12. A method according to any of the preceding claims, wherein, upon receipt of the allocation request form the third party, the method further comprises the steps of:
retrieving user identity from a universal subscriber identity module comprised in the device; and
memorizing the user identity as a trusted record.

13. A computer program product for a data-processing device, the computer program product comprising a set of instructions which, when loaded into the data-processing device, causes the device to perform the steps of the method as claimed in the claims 1 to 12.

14. A master controller for securely allocating a virtual space to a third party in a memory of a device, the memory having both trusted and un-trusted areas, the master controller comprising processing means arranged to:
receiving a request for a virtual space allocation from a third party;
authenticating the third party;
determining the existence of a unique virtual space controller for controlling access to a virtual space in an area of the memory, the unique virtual space controller being uniquely associated with the virtual space;
requesting the creation of a unique virtual space controller if one does not exist,
wherein the unique virtual space controller is located in a trusted area of memory and arranged to enforce a security policy for communication with the virtual space; and
providing the third party with the security policy for communication with the virtual space.
